(19) Europäisches Patentamt

European Patent Office

Office européen des brevets

(11) EP 1 155 561 B1

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(51) Int Cl.:
*H04M 9/08* (2006.01)

(21) Anmeldenummer: **00908980.6**

(22) Anmeldetag: **01.02.2000**

(86) Internationale Anmeldenummer:
**PCT/DE2000/000297**

(87) Internationale Veröffentlichungsnummer:
**WO 2000/052917 (08.09.2000 Gazette 2000/36)**

(54) **VORRICHTUNG UND VERFAHREN ZUR GERÄUSCHUNTERDRÜCKUNG IN FERNSPRECHEINRICHTUNGEN**

METHOD AND DEVICE FOR SUPPRESSING NOISE IN TELEPHONE DEVICES

DISPOSITIF ET PROCEDE DE SUPPRESSION DE BRUIT DANS DES INSTALLATIONS TELEPHONIQUES

(84) Benannte Vertragsstaaten:
**DE**

(30) Priorität: **26.02.1999 DE 19908478**

(43) Veröffentlichungstag der Anmeldung:
**21.11.2001 Patentblatt 2001/47**

(73) Patentinhaber: **Infineon Technologies AG**
**81669 München (DE)**

(72) Erfinder: **SCHMIDT, Gerhard**
**D-63303 Dreieich (DE)**

(74) Vertreter: **Reinhard - Skuhra - Weise & Partner**
**Postfach 44 01 51**
**80750 München (DE)**

(56) Entgegenhaltungen:
**EP-A- 0 789 476        EP-A- 0 804 011**
**EP-A- 0 880 260**

- **SCALART P ET AL: "A system for speech enhancement in the context of hands-free radiotelephony with combined noise reduction and acoustic echo cancellation" SPEECH COMMUNICATION,NL,ELSEVIER SCIENCE PUBLISHERS, AMSTERDAM, Bd. 20, Nr. 3, 1. Dezember 1996 (1996-12-01), Seiten 203-214, XP004016545 ISSN: 0167-6393**
- **GUSTAFSSON S ET AL: "Combined acoustic echo control and noise reduction for hands-free telephony" SIGNAL PROCESSING. EUROPEAN JOURNAL DEVOTED TO THE METHODS AND APPLICATIONS OF SIGNAL PROCESSING,NL, ELSEVIER SCIENCE PUBLISHERS B.V. AMSTERDAM, Bd. 64, Nr. 1, 1. Januar 1998 (1998-01-01), Seiten 21-32, XP004108821 ISSN: 0165-1684**

**Beschreibung**

Die vorliegende Erfindung betrifft eine Vorrichtung und ein Verfahren zur Geräuschunterdrückung in Fernsprecheinrichtungen.

Insbesondere betrifft die vorliegende Erfindung eine solche Vorrichtung und ein solches Verfahren zur Verwendung in Fernsprecheinrichtungen mit Freisorecheinrichtung und mit einer Pegelwaage.

Ein Verfahren gemäß dem Oberbegriff des Anspruchs 1 bzw. des Anspruchs 11 ist aus der EP 0 789 476 A2 bzw. der EP 0 880 260 A2 "A system for speech enhancement in the context of hands-free radiotelephony with combined noise reduction and acoustic echo cancellation" von P. Scalart und A. Benamar, Speech Communication 20 (1996), S. 203-214 bekannt.

Die EP 0 804 011 A2 offenbart eine freihändige Kommunikationsvorrichtung, wobei zusätzliche Filter im Sendepfad und Empfangspfad vorgesehen sind.

Im Stand der Technik sind bereits Vorrichtungen und Verfahren zur Geräuschunterdrückung in Fernsprecheinrichtungen, insbesondere mit Freisprecheinrichtung mit einer Pegelwaage bekannt. Diese Vorrichtungen weisen jedoch den Nachteil' auf, daß die dort verwendeten Echounterdrückungen entweder sehr empfindlich gegen Störgeräusche sind (durch Störgeräusche auf Seiten des freisprechenden Gesprächsteilnehmers wird auf Gegensprechen erkannt, obwohl der freisprechende Teilnehmer zur Zeit nicht spricht), zum anderen weisen mit entsprechenden Geräuschunterdrückungsfiltern versehene Vorrichtungen gemäß dem Stand der Technik eine erhebliche Laufzeitverzögerung auf. Diese ist zwar in manchen Standards zulässig (beispielsweise bei GSM oder Videokonferenzanwendungen), beim normalen Festnetzbetrieb ist die entsprechende Laufzeitverzögerung jedoch zu groß.

Es ist daher die Aufgabe der vorliegenden Erfindung, eine solche Vorrichtung und ein solches Verfahren dergestalt weiterzubilden, daß Nebengeräusche wesentlich besser unterdrücke werden, und trotzdem keine unzulässig hohen Signalverzögerungen entstehen.

Erfindungsgemäß wird diese Aufgabe durch eine entsprechende Vorrichtung gemäß Anspruch 1 gelöst, bei der im Sendepfad der Fernsprecheinrichtung ein zusätzliches Filter mit extrem kurzer Laufzeit angeordnet ist.

Es ist dabei weiter bevorzugt, auch im Empfangspfad der Fernsprecheinrichtung ein solches zusätzliches Filter mit extrem kurzer Laufzeit anzuordnen.

Das oder die zusätzlichen Filter sollten dabei eine Gruppenlaufzeit von < 2 ms aufweisen.

Um eine bessere Anpassung an wechselnde Störgeräusche zu erreichen, weisen das oder die zusätzlichen Filter erfindungsgemäß einstellbare Koeffizienten auf, wobei eine Steuerschaltung zur Einstellung der Koeffizienten vorgesehen ist.

Eine besonders geringe Signallaufzeit läßt sich erfindungsgemäß dadurch erzielen, daß das oder die zusätzlichen Filter im Vollbandbereich arbeiten, während die Steuerschaltung zur Koeffizenteneinstellung im Teilbandbereich arbeitet.

Um eine hohe Frequenzselektivität wegen der leistungsstarken niederfrequenten Signalanteile bei Sprache und gleichzeitig eine möglichst geringe Laufzeit der Koeffizienteneinstellung zu erzielen, ist es besonders bevorzugt, in der Steuerschaltung das Eingangssignal mit einer DFT-modulierten Polyphasenfilterbank mit phasenminimalem Prototyptiefpaßfilter zu verbinden.

Zur Verbesserung von Nebengeräuschen ist es besonders bevorzugt, die unterabgetasteten Ausgangssignale der PolyphasenFilterbank an eine Kurzzeitleistungsschätzungsvorrichtung an zuschließen.

Dabei ist es besonders bevorzugt, die Ausgänge der Kurzzeitleistungsschätzungsvorrichtung, die die Schätzwerte der Teilbandleistungen tragen, mit einer Vorrichtung zur Schätzung der Leistungen des Hintergrundgeräusches und einer Vorrichtung zur psychoakustischen Gewichtung der gestörten Teilbandleistungen zu verbinden.

Weiter ist es bevorzugt, die Ausgänge der Vorrichtung zur Schätzung der Leistungen des Hintergrundgeräusches über eine Vorrichtung zur nichtlinearen Anhebung der Geräuschsignale und die Ausgänge der Vorrichtung zur psychoakustischen Gewichtung direkt mit einer Vorrichtung zur Berechnung der Teilbandgewichtungsfaktoren zu verbinden.

Weiter ist es bevorzugt, die Ausgänge der Vorrichtung zur Berechnung der Teilbandgewichtungsfaktoren mit einer Vorrichtung zu einer modifizierten inversen diskreten Fouriertransformation zu verbinden, deren Ausgang mit dem Koeffizienteneingang des oder der zusätzlichen Filter verbunden ist.

Es ist dabei weiter bevorzugt, daß zumindest ein Teil der Ausgänge der Kurzzeitleistungsschätzungsvorrichtung mit einer Vorrichtung zum Dämpfungsausgleich verbunden sind, deren Ausgang mit einem Steuereingang der Vorrichtung zur Berechnung der Teilbandgewichtungsfaktoren verbunden ist.

Im Hinblick auf die Reduzierung der Signalverzögerung ist es besonders bevorzugt, daß es sich bei dem oder den zusätzlichen Filtern um kurze Transversalfilter handelt, vorzugsweise mit einer sehr geringen Ordnung von < 20.

Zur Lösung der o.g. Aufgabe lehrt die vorliegende Erfindung auch ein gattungsgemäßes Verfahren nach Anspruch 11, bei dem das Sendesignal der Fernsprecheinrichtung einer zusätzlichen Filterung mit sehr geringer Laufzeit unterworfen wird.

Es ist dabei besonders bevorzugt, auch das Empfangssignal der Fernsprecheinrichtung einer solchen zusätzlichen Filterung mit sehr geringer Laufzeit zu unterwerfen.

Im Hinblick auf die Anforderungen an Festnetztelefonverbindungen ist es besonders bevorzugt, daß die Gruppenlaufzeit für die zusätzlichen Filterungen auf weniger als 2 ms eingestellt wird.

Es ist dabei besonders bevorzugt, daß die Filterung mittels kurzer Transversalfilter durchgeführt wird, deren.Ordnung vorzugsweise kleiner als 20 ist.

Erfindungsgemäß werden die Transversalfilter mit einstellbaren Koeffizienten gesteuert, die für beide Transversalfilter auf die gleiche Weise eingestellt werden.

Eine besonders schnelle und rechenzeiteffektive Verarbeitung läßt sich erfindungsgemäß dadurch erzielen, daß die Filterung im Vollbandbereich durchgeführt wird, während die Bestimmung der Koeffizienten im Teilbandbereich durchgeführt wird.

Vorzugsweise werden mehrere, unterschiedliche Abtastraten innerhalb des Verfahrens verwendet.

Es ist besonders bevorzugt, die Bestimmung der Koeffizienten mittels einer Teilbandanalyse und einer Rücktransformation mittels einer modifizierten inversen diskreten Fouriertransformation durchzuführen.

Dabei wird die modifizierte inverse die Fouriertransformation vorzugsweise auf die Teilbandfilterkoeffizienten angewendet.

Es ist dabei besonders bevorzugt, die Teilbandanalyse mittels einer Filterbank in Frequenzteilbändern zu implementieren.

Die Filterbank wird dabei vorzugsweise als mittels digitaler Fouriertransformation modulierte Polyphasenfilterbank mit phasenminimalem Prototyptiefpaßfilter ausgeführt.

Es ist dabei besonders bevorzugt, daß bei der Bestimmung der Koeffizienten zusätzlich eine Kurzzeitleistungsschätzung mittels nichtlinearer Betragsglättungen der Teilbandsignale durchgeführt wird.

Vorzugsweise erfolgt bei der Bestimmung der Koeffizienten zusätzlich eine psychoakustische Gewichtung der geschätzten Summensignalleistungen.

Weiter ist es vorteilhaft, bei der Bestimmung der Koeffizienten zusätzlich eine nichtlineare Anhebung der Geräuschleistungen durchzuführen. Dadurch können vorteilhafterweise verfahrensbedingte Störgeräusche, sogenannte "Musical tones" verhindert werden.

Damit nicht der Eindruck entsteht, der ferne Sprecher würde bei Einsetzen von Störgeräuschen plötzlich leiser sprechen, ist es bevorzugt, bei der Bestimmung der Koeffizienten zusätzlich eine automatische Verstärkungssteuerung zu verwenden, welche die Filterkoeffizienten so gewichtet, daß das geräuscherfüllte und das geräuschreduzierte Signal ein näherungsweise gleiches Lautheitsempfinden hervorrufen.

Im Unterschied zu bisherigen Verfahren hat die vorliegende Erfindung den großen Vorteil, daß lediglich eine sehr geringe Signalverzögerung erfolgt und für das Gesamtverfahren nur ein relativ geringer Rechenaufwand erforderlich ist.

Die vorliegende Erfindung wird im folgenden anhand der beigefügten Zeichnungen näher erläutert. Es zeigt:

**Fig. 1** das Modell einer Freisprecheinrichtung;

**Fig. 2** eine ausführlichere Darstellung mit den jeweils auftretenden lokalen und fernen Hintergrundgeräuschen;

**Fig. 3** eine Übersichtsdarstellung einer erfindungsgemäßen Freisprecheinrichtung;

**Fig. 4** die Dämpfungsanforderungen in Abhängigkeit von der Echolaufzeit;

**Fig. 5** eine Übersichtsdarstellung einer erfindungsgemäßen Geräuschunterdrückung;

**Fig. 6** ein gemitteltes Sprachspektrum deutscher Sprecher;

**Fig. 7** die Struktur einer erfindungsgemäßen Analysefilterbank;

**Fig. 8** eine schematische Darstellung der erfindungsgemäßen psychoakustischen Gewichtung;

**Fig. 9** eine erfindungsgemäße Berechnungsstruktur der Geräuschleistungsschätzung in einem Teilband; und

**Fig. 10** den beispielhaften Verlauf einer erfindungsgemäßen Teilbanddämpfung; und

**Fig. 11** die Berechnungsform für die erfindungsgemäßen Filterkoeffizienten.

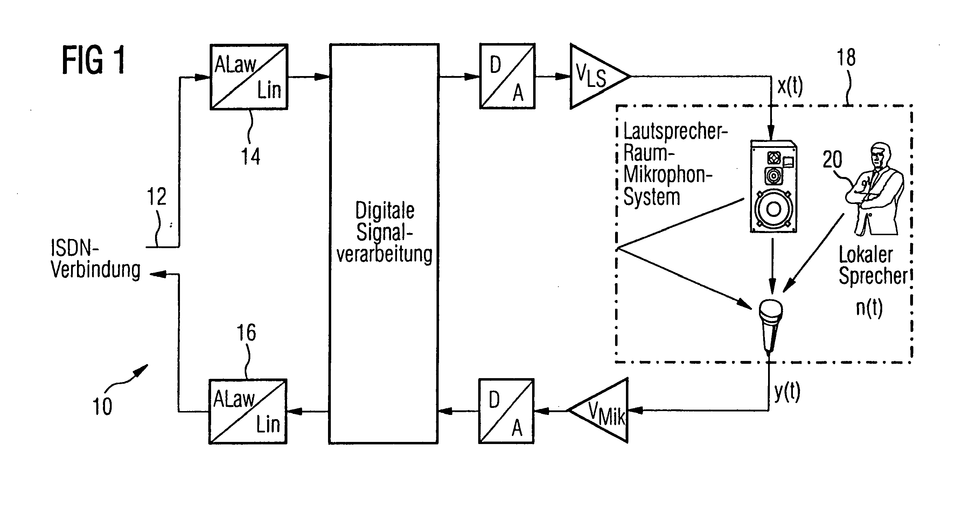

In Fig. 1 ist ein vereinfachtes Modell einer Freisprecheinrichtung 10 mit Anschluß an eine digitale Verbindung 12 dargestellt. Die im europäischen ISDN-Netz verwendete A-Law-Codierung bzw. Decodierung ist in den beiden linken Blöcken 14, 16 dargestellt. Auf der rechten Seite ist das Lautsprecher-Raum-Mikrophonsystem 18 (LRM-System) mit dem lokalen Gesprächsteilnehmer 20, dem Benutzer der Freisprecheinrichtung, skizziert.

Durch die akustische Kopplung zwischen Lautsprecher und Mikrophon kommt es zum Übersprechen über das LRM-System. Dieses Übersprechen wird vom fernen Teilnehmer als störendes Echo wahrgenommen. Akustische Wellen treten dabei aus dem Lautsprecher aus und breiten sich im Raum aus. Durch Reflexion an den Wänden und anderen sich im Raum befindlichen Gegenständen entstehen mehrere Ausbreitungspfade, durch die unterschiedliche Laufzeiten des Lautsprechersignals entstehen. Das Echosignal am Mikrophon besteht somit aus der Überlagerung einer Vielzahl von Echoanteilen und ggf. dem Nutzsignal n(t): dem lokalen Sprecher.

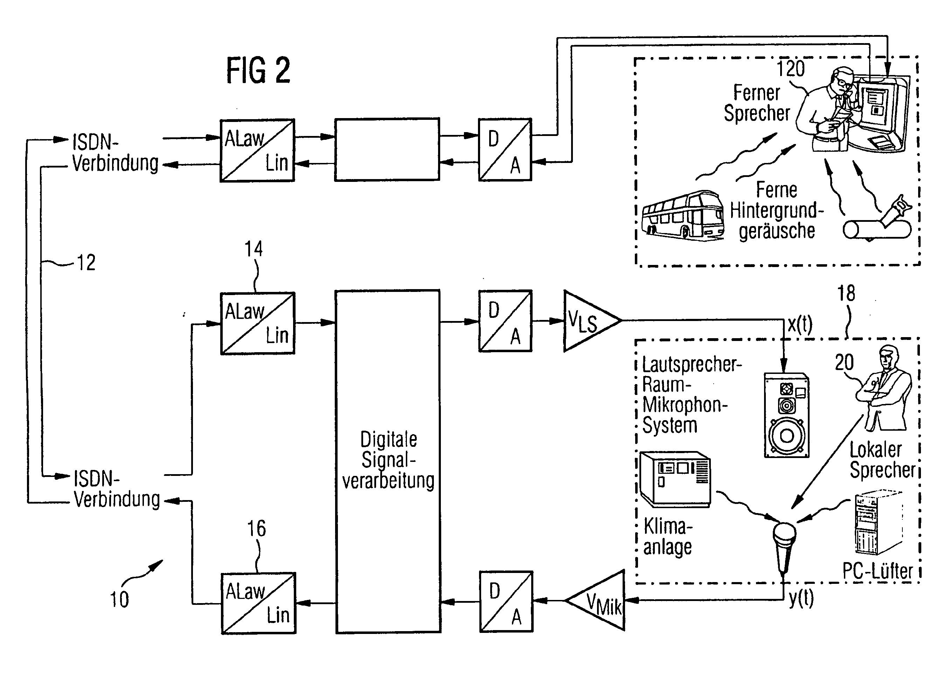

In Fig. 2 ist ein erweitertes Modell einer Fernsprechverbindung dargestellt. Das bisherige Modell (Fig. 1) wurde dabei um den Teil des fernen Gesprächsteilnehmers 120 ergänzt. Dargestellt ist eine ISDN-Verbindung 12, wobei auf der lokalen Seite eine Freisprecheinrichtung 10 verwendet wird. Der ferne Teilnehmer telefoniert mit einem Handapparat. Besonderes Augenmerk wurde auf die jeweiligen Hintergrundgeräusche gelegt.

Auf der Seite mit der Freisprecheinrichtung wurden vom Mikrophon nicht nur die Sprache des lokalen Gesprächsteilnehmers (das eigentliche Nutzsignal), sondern auch Echoanteile des fernen Sprechers und lokale Hintergrundgeräusche aufgenommen. Beispiele für solche Geräuschquellen innerhalb von Büroräumen sind PC-Lüfter oder Klimaanlagen. Beide sind im unteren Teil der Fig. 2 skizziert. Verwendet der lokale Sprecher die Freisprecheinrichtung in Kraftfahrzeugen (GSM-Verbindung), so können Fahrtwind-, Roll- oder Motorgeräusche die Verständlichkeit der Sprachanteile im Mikrophonsignal verschlechtern. Aufgabe einer digitalen Signalverarbeitung innerhalb der Freisprecheinrichtung sollte eine Verbesserung der Sprachqualität des zu sendenden Signals sein.

Auch auf der fernen Seite können sich störende Hintergrundgeräusche dem Sprachsignal des Gesprächsteilnehmers überlagern, obgleich diese bedingt durch die Bauart eines Handapparates leiser sind als im Freisprechfall. Bevor das Signal des fernen Sprechers 120 auf dem Lautsprecher beim lokalen Teilnehmer 20 ausgegeben wird, kann auch hier versucht werden, die Sprachqualität dieses Signals zu verbessern. Durch die zwischen der Geräuschentstehung und Geräuschunterdrückung liegende Verbindung - einschließlich der Codierung und Decodierung - ist zu erwarten, daß dieser Teil der Geräuschunterdrückung schwieriger zu realisieren ist, als die lokale Geräuschreduktion. Bei diesem Teil der Geräuschunterdrückung kann gewählt werden, ob das Verfahren lediglich im Steuerungspfad der Pegelwaage (zur Vermeidung von fehlerhaften Sprachdetektionen) oder aber im Signalpfad plaziert werden soll.

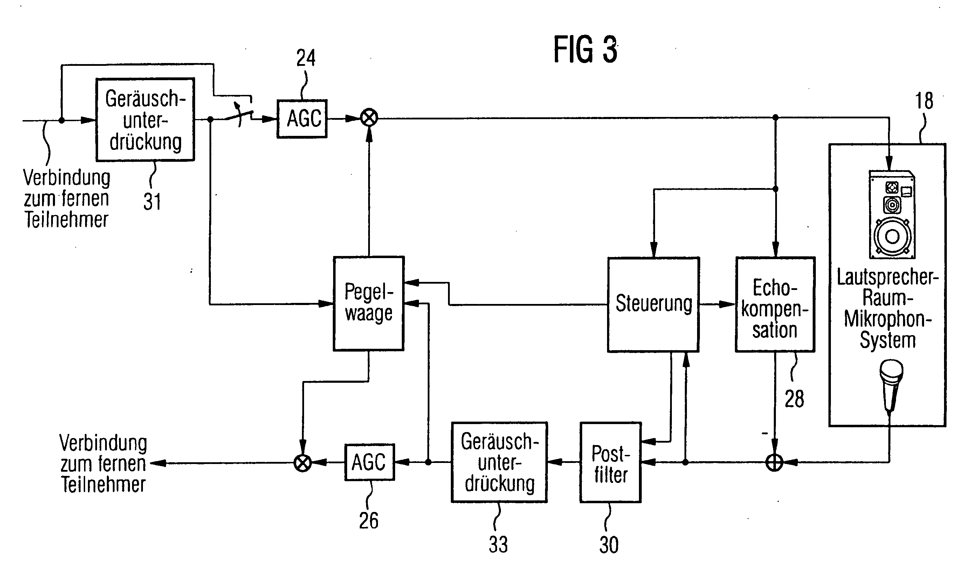

In Fig. 3 ist eine Übersicht einer erfindungsgemäßen Freisprecheinrichtung dargestellt. Zentrales Element des Verfahrens ist eine Pegelwaage 22, welche im linken Teil der Fig. 3 dargestellt ist. Optional können zwei Verstärkungssteuerungen 24, 26 (Automatic Gain Control = AGC) in den Sende- und den Empfangspfad eingeschaltet werden. Die Pegelwaage garantiert die durch die ITU-T- bzw. ETSI-Empfehlungen vorgeschriebenen Mindestdämpfungen, indem sie abhängig von der Gesprächssituation Dämpfungen in den Sende- und/oder den Empfangspfad einfügt. Bei Aktivität des fernen Teilnehmers wird der Empfangspfad freigeschaltet und das Signal des fernen Teilnehmers wird ungedämpft auf dem Lautsprecher ausgegeben. Die bei abgeschalteten oder schlecht abgeglichenen Kompensatoren entstehenden Echos werden durch die in den Sendepfad eingefügte Dämpfung stark verringert. Bei Aktivität des lokalen Sprechers kehrt sich die Situation um. Während der Empfangspfad stark bedämpft wird, fügt die Pegelwaage 22 in den Sendepfad keine Dämpfung ein und das Signal des lokalen Sprechers wird ungedämpft übertragen. Schwieriger wird die Steuerung der Pegelwaage 22 im Gegensprechfall. Hier erhalten beide Pfade (und damit auch die Teilnehmersignale) jeweils die Hälfte der einzufügenden Dämpfung oder bei nicht optimaler Steuerung wird zumindest einer der beiden Signalpfade gedämpft. Gegensprechen ist damit nicht oder nur eingeschränkt möglich.

Abhilfe schafft hier der Einsatz von adaptiven Echokompensatoren 28 - dargestellt im rechten Teil der Fig. 3. Diese versuchen, das LRM-System digital nachzubilden, um dann den Echoanteil des fernen Teilnehmers aus dem Mikrophonsignal herauszurechnen. Je nachdem, wie gut die Kompensatoren dies bewerkstelligen, kann die durch die Pegelwaage 22 einzufügende Gesamtdämpfung reduziert werden.

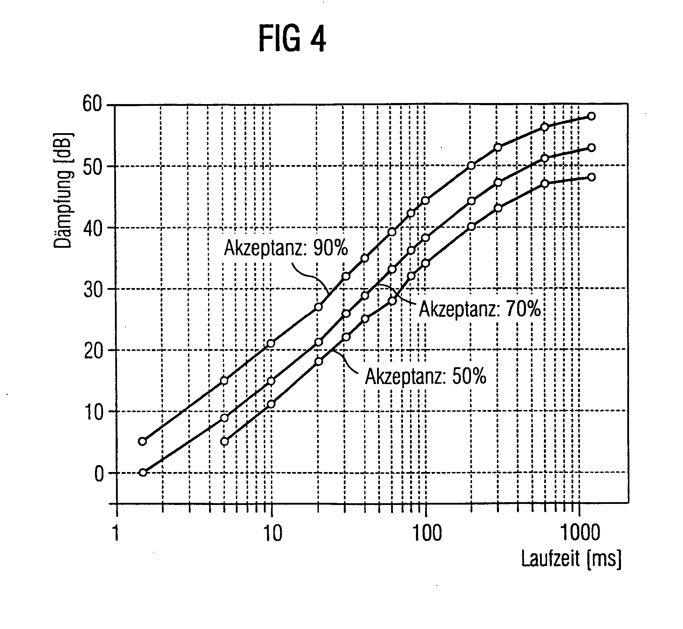

In Freisprecheinrichtungen mit Geräuschreduktion gemäß dem Stand der Technik wird die Laufzeit hauptsächlich von der geräuschreduzierenden Komponente bestimmt. In Fig. 4 sind die Ergebnisse einer Studie dargestellt. Hier wurde versucht, herauszufinden, welche Echodämpfung abhängig von der Laufzeit dieses Echos notwendig ist, damit 90, 70 bzw. 50 Prozent der Befragten mit der Gesprächsqualität zufrieden sind.

Basierend auf dieser Studie sind die Anforderungen, die an Freisprechsysteme mit Geräuschunterdrückungsverfahren gestellt werden, aufgrund der größeren Laufzeit höher als die Anforderungen an herkömmliche Freisprechtelefone.

Da die Echokompensatoren in ihrer Leistungsfähigkeit begrenzt sind und derart hohe Echodämpfungen mit der zur Verfügung stehenden Hardware nicht erreichen können, wurde ein sog. Postfilter 30 eingeführt. Eine detaillierte Beschreibung hierzu befindet sich in DE-A-198 06 015.

Zur Unterdrückung störender Hintergrundgeräusche werden zwei kurze Transversalfilter 31, 33 in den Sende- und in den Empfangspfad der Freisprecheinrichtung geschaltet. Das Filter 33 im Sendepfad soll lokale Hintergrundgeräusche reduzieren. Damit wird zum einen die Sprachqualität des Sendesignals erhöht

- zum anderen verringert sich die Wahrscheinlichkeit einer fehlerhaften Öffnung des Sendekanals durch die Pegelwaage 22.

Das Filter 31 im Empfangspfad soll bei Gesprächssituationen, in denen auch das ferne Teilnehmersignal verrauscht ist, die Sprachqualität dieses Signals verbessern. Beide Filter 31, 33 wurden so entworfen, daß die Gruppenlaufzeit gering ist und kleiner oder gleich 2 ms beträgt. Sollte die Freisprecheinrichtung keine weiteren Verzögerungen enthalten, kann somit die ITU-T-Empfehlung G. 167 für Festnetztelefone in bezug auf die Laufzeit (bei Verwendung nur eines Geräuschunterdrükkungsfilters im Signalpfad) eingehalten werden. Der gesamte Rechenaufwand für dieses Verfahren liegt bei weniger als zwei MIPS pro Filter (zugrundegelegt wurde der Signalprozessor Siemens SPC), was eine Anwendung selbst auf einfachsten Signalprozessoren ermöglicht.

Im folgenden wird zunächst ein Überblick über das erfindungsgemäße Verfahren zur Sprachverbesserung gegeben. Anschließend werden der Stand der Technik in bezug auf einkanalige Geräuschunterdrückungsverfahren sowie die Unterschiede zu dem erfindungsgemäßen Verfahren beschrieben.

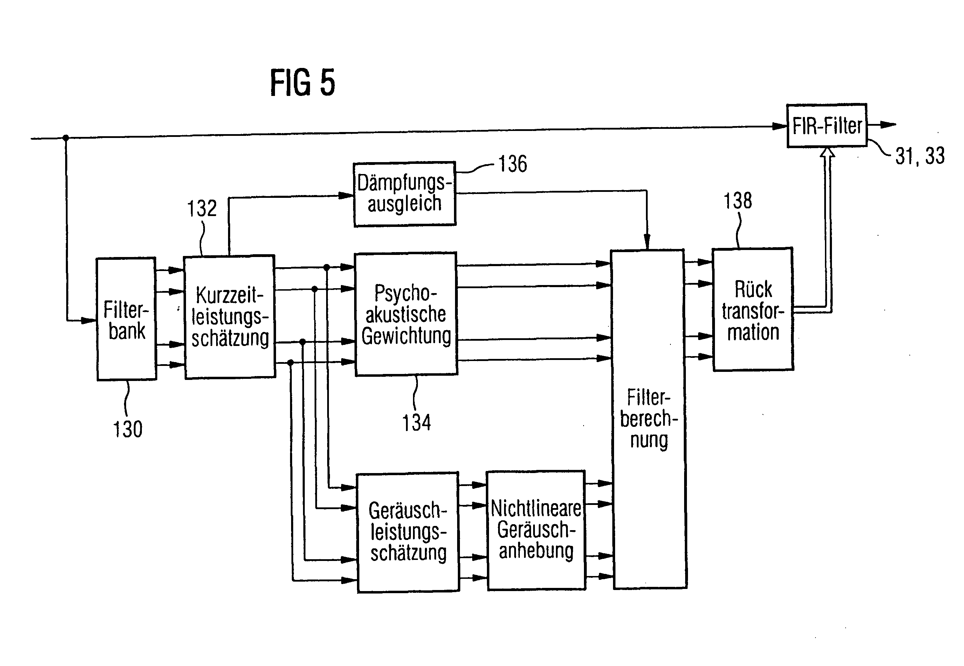

In Fig. 5 ist die Struktur der erfindungsgemäßen Geräuschunterdrückung dargestellt. Die beiden Filter 31, 33 (im Sende-und Empfangspfad) werden mit dem gleichen Algorithmus eingestellt. Die eigentliche Signalfilterung erfolgt durch ein kurzes (derzeit 16 Koeffizienten langes) Transversalfilter, welches im oberen Teil der Fig. 5 dargestellt ist. Bei einer Abtastrate von 8 kHz wird damit eine Verzögerung von maximal 2 ms (bei 16 Koeffizienten) in den Signalpfad eingeführt.

Für die Einstellung der Filterkoeffizienten wird zunächst eine Teilbandanalyse des Eingangssignals durchgeführt. Hierbei wird eine DFT-modulierte Polyphasenfilterbank 130 mit phasenminimalem Prototyptiefpaßfilter eingesetzt. Die Phasenminimalität des Prototyptiefpaßfilters garantiert eine möglichst geringe Analyseverzögerung - Polyphasenfilterbänke können selbst auf einfachsten Signalprozessoren mit geringem Rechenaufwand implementiert werden. Die Ausgangssignale der Filterbank werden unterabgetastet einer Kurzzeitleistungsschätzung 132 zugeführt. Aus diesen Schätzwerten der Teilbandleistungen werden zum einen die Leistungen des Hintergrundgeräusches geschätzt (unterer Teil der Fig. 5), zum anderen erfolgt eine psychoakustische Gewichtung 134 der gestörten Teilbandleistungen. Diese Gewichtung 134 soll Verzerrungen, welche sich durch die Geräuschunterdrückung ergeben, möglichst gering halten. Die Geräuschschätzungen werden ebenfalls nichtlinear angehoben. Dies hat den Zweck der Vermeidung sog. "musical tones". Eine genaue Beschreibung dieses Effekts befindet sich in "P. Vary: Noise suppression by spectral magnitude estimation - mechanism and theoretical limits, Signal Processing 8, Seite 387 - 400, 1985".

Aus den modifizierten Schätzungen der Summensignalleistungen und der Geräuschleistungen werden gemäß einer nichtlinearen Verarbeitung die Teilbandgewichtungsfaktoren bestimmt. Hierbei wird versucht, eine gleiche Lautheit des verrauschten und des geräuschreduzierten Signals zu erreichen. Eine Teilfunktion 136 mit der Bezeichnung Dämpfungsausgleich versucht daher Signalanteile mit möglichst großem Signal-Störungs-Abstand im Zeit-Frequenz-Bereich zu finden und basierend auf diesen Signalanteilen die Koeffizienteneinstellung so zu modifizieren, daß die gleiche Lautheit des ungestörten und des gestörten Signals erreicht wird.

Die erhaltenen Teilbandgewichtungsfaktoren werden mittels einer modifizierten inversen DFT 138 in den Zeitbereich zurücktransformiert. Hierbei wird eine Filterimpulsantwort im Gesamtband generiert. Von der Möglichkeit der Rücktransformation der gewichteten Teilbandsignale wird aufgrund der hierfür notwendigen phasenmaximalen Synthesefilterbank und der damit verbundenen Laufzeit abgesehen.

Verfahren zur Geräuschunterdrückung gemäß dem bisherigen Stand der Technik lassen sich grundsätzlich in drei Klassen einteilen:

Verfahren, basierend auf DFT-Zerlegungen

Hier wird das Eingangssignal in Blöcke unterteilt, diese werden dann mittels einer DFT in den Frequenzbereich transformiert. Im Frequenzbereich wird die eigentliche Geräuschunterdrückung durchgeführt. Mittels des "Overadd-" oder des "Overlap-save-Prinzips" werden die Blöcke wieder zu einem Zeitsignal zusammengesetzt.

Verfahren, basierend auf Filterbank-Zerlegungen

Das Gesamtbandsignal wird mittels einer Analysefilterbank in einzelne Teilbänder zerlegt. Hier können gleichförmige Filterbänke (alle Teilbänder haben die gleiche Bandbreite) oder ungleichförmige Filterbänke (ungleiche Bandbreite) eingesetzt werden. Die Geräuschunterdrückung wird im Teilbandbereich (bandpaßgefilterte, unterabgetastete Zeitsignale) durchgeführt. Mit einer SyntheseFilterbank wird aus den Teilbandsignalen wieder ein Gesamtbandsignal generiert. Verfahren, die auf einer Wavelet-Zerlegung basieren, sollen aufgrund der häufig verwendeten Filterbankrealisierung ebenfalls zu dieser Klasse gehören.

Verfahren, basierend auf Eigenwert-Zerlegungen

Bei diesen Verfahren wird versucht, eine Eigenwertzerlegung der Autokorrelationsmatrix des Eingangssignals durchzuführen. Bei den zu den kleinen Eigenwerten gehörenden Eigenvektoren wird davon ausgegangen, daß sie dem Geräuschanteil des Eingangssignals zugehörig sind. Diese werden zu Null gesetzt. Anschließend wird aus den modifizierten Eigenvektoren das geräuschreduzierte Ausgangssignal gebildet.

Bei der oben genannten Aufteilung wurden aufgrund des Vergleichs mit dem erfindungsgemäßen Verfahren lediglich die einkanaligen, passiven Verfahren berücksichtigt. Durch die Eigenwertanalyse sind Geräuschreduktionen nach dem letztgenannten Prinzip sehr rechenaufwendig und benötigen lange Signallaufzeiten und werden daher hier nicht weiter behandelt.

Für Geräuschreduktionsverfahren ist eine hohe Frequenzselektivität der Eingangssignalanalyse notwendig. Die höherfrequenten Signalanteile dürfen nicht durch Aliasing bei Filterbänken oder durch den Leck-Effekt bei DFT-Zerlegungen gestört werden. Bei DFT-Zerlegungen führt das zur Verwendung von Fensterfunktionen, die eine ausreichende Dämpfung der Nebenmaxima erreichen. Hierdurch wird aber ebenfalls der Hauptdurchlaßbereich verbreitert, was wiederum zu großen Blocklängen führt. Es sind keine Verfahren bekannt, die mit Blocklängen B von lediglich B = 16 bei einer Abtastfrequenz von $f_{ab}$=8 kHz arbeiten. Die Laufzeiten von bisherigen DFT-basierenden Verfahren sind damit deutlich größer, als die durch die ITU vorgeschriebene Maximallaufzeit im Festnetzbereich von 2 ms.

Das Problem der Nachbarkanaldämpfung kann durch Verwendung von Filterbankstrukturen gelöst werden - allerdings mit dem Nachteil einer größeren Laufzeit. Innerhalb des Analyse-Synthese-Sytems kann die Laufzeit in gewissen Grenzen aufgeteilt werden. Wird allerdings die Analysefilterbank phasenminimal entworfen, so führt das zu einer phasenmaximalen Synthesefilterbank. Auch mit reinen Filterbanksystemen lassen sich nicht die ITU-T-Forderungen nach der geringen Festnetzlaufzeit erfüllen.

Das erfindungsgemäße Verfahren kombiniert eine Teilbandanalyse (mit den Vorteilen der geringen Laufzeit von phasenminimalen Analysefilterbänken) und eine Rücktransformation mittels einer inversen DFT. Die inverse DFT wird allerdings nicht auf das Signal, sondern in einer modifizierten Form auf die Teilbandfilterkoeffizienten angewendet. Die Forderung nach der hohen Frequenzselektivität aufgrund der leistungsstarken niederfrequenten Signalanteile bei Sprache und den damit verbundenen Aliasing- oder Leckeffekten in den höherfrequenten Bereichen kann hierdurch deutlich vermindert werden. Eine ausführlichere Beschreibung dieses Zusammenhangs folgt weiter unten. Die beschriebenen Schwierigkeiten bei geringen Blocklängen können somit vermieden werden. Durch diese Kombination ist es möglich, eine Geräuschreduktion mit geringer Laufzeit und nur geringem Rechenaufwand (geringe Zahl der Frequenzstützstellen) zu erreichen.

Bevor mit einer detaillierten Verfahrensbeschreibung begonnen wird, sind im folgenden die Eigenschaften des Freisprechverfahrens bzw. des Verfahrensteils, auf welchen sich die vorliegende Erfindung konzentriert, tabellarisch aufgelistet.

Das Verfahren zeichnet sich dadurch aus, daß

nur sehr kurze Signallaufzeiten durch die Geräuschunterdrückung in den Signalpfad eingefügt werden,
die eigentliche Filterung im Vollbandbereich erfolgt, die Koeffizientenbestimmung für das Filter allerdings im Teilbandbereich durchgeführt wird,
mehrere, unterschiedliche Abtastraten innerhalb des Verfahrens verwendet werden (Multiratensystem),
die Frequenzanalyse mittels einer Filterbank in Frequenzteilbändern implementiert wird,
der Prototyptiefpaß der Filterbank phasenminimal entworfen wird,
eine Kurzzeitleistungsschätzung mittels nichtlinearer Betragsglättungen der Teilbandsignale durchgeführt wird, eine psychoakustische Gewichtung der geschätzten Summensignalleistungen durchgeführt wird,
eine nichtlineare Anhebung der Geräuschleistungsschätzungen durchgeführt wird,
eine automatische Verstärkungssteuerung verwendet wird, welche die Filterkoeffizienten so gewichtet, daß das geräuschreduzierte Signal ein näherungsweise gleiches Lautheitsempfinden hervorrufen.

Die eigentliche Signalfilterung zur Geräuschreduktion erfolgt durch ein kurzes Transversalfilter, welches im (Gesamtband-) Signalpfad plaziert wird. Die Gesamtbandfilterung erfolgt gemäß folgender Berechnungsvorschrift:

$$\gamma(k) = \underline{g}^T(k) * \underline{x}(k)$$
$$= \sum_{i=0}^{N-1} g_i(k) x(k-\imath).$$

Mit $\underline{g}(k)$ wurde dabei der Filtervektor des Gesamtbandtransversalfilters bezeichnet

$$\underline{g}(k) = (g_0(k), g_1(k), g_2(k), \ldots g_{N-1}(k))^T.$$

Der Vektor $\underline{x}(k)$ beinhaltet die letzten N Abtastwerte des Eingangssignals des Geräuschunterdrückungsfilters:

$$\underline{x}(k) = (x(k), x(k-1), x(k-2), \ldots x(k-N+1))^T.$$

Die Ordnung N-1 des Transversalfilters kann im Vergleich zu bisherigen Zeitbereichsverfahren sehr gering gewählt werden, z.B. N=16.

Für die Einstellung der Filterkoeffizienten wird eine Teilbandzerlegung verwendet. Die Anzahl der Frequenzstützstellen sollte bei dem hier vorgestellten Verfahren gleich der Anzahl der Filterkoeffizienten des Gesamtbandfilters (N) sein. Die Dämpfung eines Filterbandkanals gegenüber den anderen sollte so groß gewählt werden, daß trotz der Kopplung der niedrigen Frequenzanteile durch Aliasing in den höheren Frequenzen ein mittleres Signal-Aliasing-Verhältnis von etwa 20 dB eingehalten werden kann. Der Wert von 20 dB entspricht dabei dem Maximalwert der Dämpfung, welche die Geräuschunterdrückung einfügen darf.

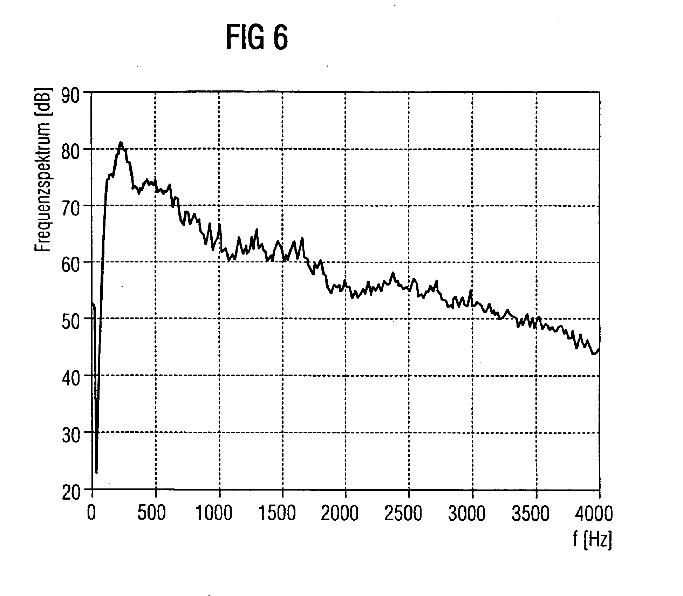

In Fig. 6 ist zur Veranschaulichung ein gemitteltes Sprachspektrum dargestellt. Es wurde ermittelt aus acht deutschen Sprachproben von jeweils vier Sprechern und vier Sprecherinnen. Die Gesamtlänge der Sprachprobe betrug etwa 50 s. Das Spektrum wurde berechnet, indem die Betragsquadrate der Fouriertransformierten von Rahmen der Länge 1024 bei Gewichtung mit einem Hanning-Fenster gemittelt wurden. Das gemittelte Spektrum ist logarithmisch über der Frequenz aufgetragen.

Aus dem gemittelten Sprachspektrum ist zu erkennen, daß bereits eine Dämpfung von etwa 40 dB notwendig ist, damit die niederfrequenten Signalanteile ein mittleres Signal-Aliasing-Verhältnis von 0 dB in den höherfrequenten Teilbändern erzeugen. Zusammen mit der maximalen Dämpfung der Geräuschunterdrückung sind somit Restkanaldämpfungen der Filterbank von etwa 60 dB notwendig.

Bei der Auswahl des Filterbanktyps spielt die der Implentierung zugrundeliegende Hardware-Plattform eine wesentliche Rolle. Zwar können mit IIR-Filterbänken die vorgegebenen Dämpfungsanforderungen mit sehr geringen Filterordnungen erreicht werden, die Eigenschaften solcher Filterbänke sind allerdings sehr anfällig gegenüber Rechenungenauigkeiten von Festkomma-Signalprozessoren. In den meisten Fällen muß von 16 x 16 Bit-Multiplikationen, welche sehr schnell auf Consumer-Prozessoren durchgeführt werden können, zu 16 Bit x 32 Bit - oder gar zu 32 Bit x 32 Bit-Multiplikationen übergegangen werden. Diese letztgenannten Multiplikationsformen benötigen aber erheblich mehr Rechenaufwand, so daß in dem hier beschriebenen Verfahren DFT-modulierte FIR-Polyphasenfilterbänke eingesetzt wurden.

Das erfindungsgemäße Verfahren beruht auf der in "G. Wackersreuther: Ein Beitrag zum Entwurf digitaler Filterbänke, Nr. 64, Ausgewählte Arbeiten über Nachrichtensyteme, Erlangen, 1987" vorgestellten Filterbankrealisierung. Die mit der Unterabtastrate r unterabgetasteten Teilbandsignale werden gemäß den folgenden Berechnungsvorschriften bestimmt:

$$x_\mu^{(r)}(n) \quad = \quad \sum_{\nu=0}^{N-1} e^{j\frac{2\pi}{M}\nu\mu} \upsilon_\nu^{(r)}(n)$$

$$mit$$

$$\mu \in \{0, \ldots, \frac{N}{2}\}.$$

Das hochgestellte (r) soll dabei auf die Unterabtastung hinweisen. Das tiefgestellte $\mu$ bzw. $\nu$ wählt dabei eines der Teilbandsignale aus dem Bereich 0 ... N-1 aus. Da die komplexwertigen Signale $x_\mu^{(r)}(n)$ aus einem reellwertigen Signal $x(k)$ berechnet wurden, können die oberen Frequenzbandsignale durch komplexe Konjugation aus den unteren Teilbändern bestimmt werden. Um die für die Berechnungsvorschrift notwendigen Zwischensignale $v_v^{(r)}(n)$ zu berechnen, werden zunächst folgende Hilfssignale eingeführt:

$$\widetilde{x}_p^{(N)}(n) \quad = \quad x(nN - p)$$

$$h_p^{(N)}(n) \quad = \quad h_{TP}(nN + p)$$

mit $n,p \in Z$ (Menge der ganzen Zahlen).

Mit $h_{TP}(k)$ wurde dabei die Impulsantwort des der Filterbank zugrundeliegenden sog. Prototyptiefpasses bezeichnet. Mit den Hilfsgrößen $\widetilde{x}_p^{(N)}(n)$ und $h_p^{(N)}(n)$ kann die Berechnung der Zwischensignale $v_v^{(r)}(n)$ wie folgt angegeben werden:

$$v_v^{(r)}(n) = \widetilde{x}_{v-(rm\,\mathrm{mod}\,N)}^{(N)}\left(\frac{rm - (rm\,\mathrm{mod}\,N)}{N}\right) * h_v^{(N)}\left(\frac{rm - (rm\,\mathrm{mod}\,N)}{N}\right)$$

$$= \sum_{l=0}^{N_{TP}/N} \widetilde{x}_{v-(rm\,\mathrm{mod}\,N)}^{(N)}\left(\frac{rm - (rm\,\mathrm{mod}\,N)}{N} - l\right) h_v^{(N)}(l)\,.$$

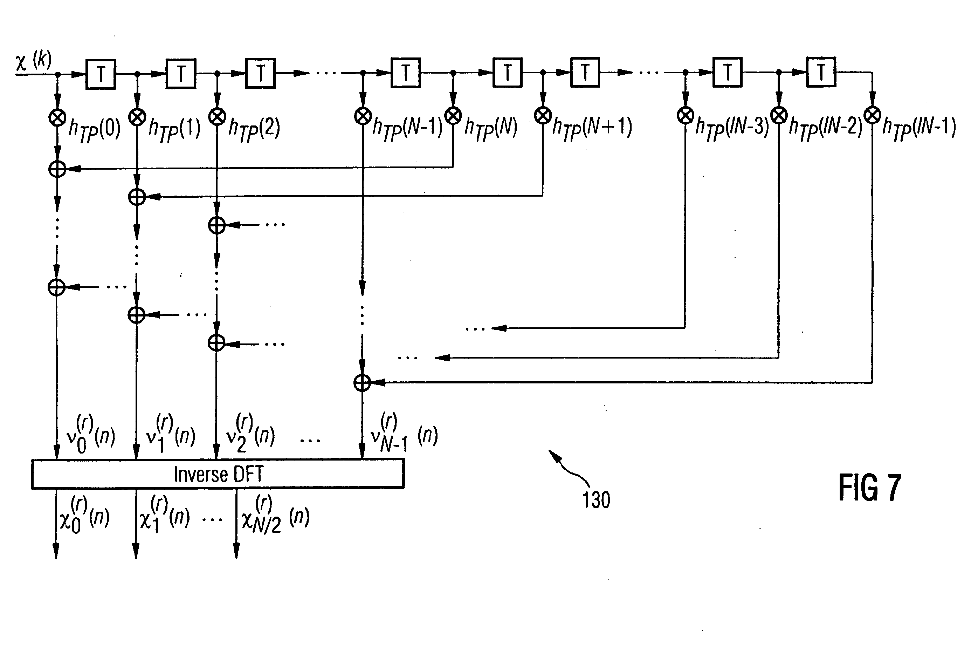

Mit $N_{TP}$ - 1 wurde dabei die Ordnung des Prototyptiefpasses bezeichnet. In Fig. 7 ist eine Strukturdarstellung der Filterbankberechnung dargestellt. Lediglich das Füllen des Eingangsspeichers erfolgt mit der vollen Abtastrate - alle weiteren Berechnungen (Faltung und inverse DFT) werden nur unterabgertastet durchgeführt. Die zunächst komplex erscheinende Indizierung der Hilfsgrößen kann selbst auf einfachen Signalprozessoren effizient durchgeführt werden, ohne explizit jede einzelne Division bzw. Modulo-Berechnung auszuführen.

Aus den Teilbandsignalen $x_\mu^{(r)}(n)$ werden durch nichtlineare Betragsglättungen Schätzwerte der Kurzzeitleistungen gebildet. Die Betragsbildung wird hierbei aus Aufwands- und Speichergründen gemäß der folgenden Berechnungsform angenähert:

$$x_{\mu,abs}^{(r)}(n) = \left| \,\mathrm{Re}\!\left\{x_\mu^{(r)}(n)\right\}\,\right| + \left| \,\mathrm{Im}\!\left\{x_\mu^{(r)}(n)\right\}\,\right|.$$

Die eigentlichen Kurzzeitschätzwerte werden durch nichtlineare IIR-Filterungen erster Ordnung gebildet:

$$\overline{\left|x_\mu^{(r)}(n)\right|} = \beta_\mu(n)\, x_{\mu,abs}^{(r)}(n) + (1 - \beta_\mu(n))\,\overline{\left|x_\mu^{(r)}(n - 1)\right|}.$$

Die Zeitkonstante $\beta_\mu(n)$ wird dabei so gewählt, daß einem Leistungsanstieg schnell und einem Leistungsabfall langsam gefolgt werden kann:

$$\beta_\mu(n) = \begin{cases} \beta_r, & falls \ x^{(r)}_{\mu.abs}(n) > \overline{\left| x^{(r)}_\mu(n-1) \right|} \\ \beta_f, & sonst \end{cases}$$

mit $0 \le \beta_r < \beta_f \le 1$.

Durch die Wahl von unterschiedlichen Zeitkonstanten soll dem psychoakustischen Effekt der zeitlichen Nachverdeckung Rechnung getragen werden. Ein plötzlicher Anstieg der Signalleistungen wird von dem Geräuschunterdrückungsverfahren als einsetzende Sprache interpretiert. In solchen Fällen wird eine bereits eingefügte Dämpfung schnell zurückgenommen. Bei einem plötzlichen Abfall der Signalleistungen wird vom Ende eines Sprachsegments ausgegangen. Durch den zeitlichen Verdeckungseffekt ist das menschliche Ohr nun kurzzeitig unempfindlich gegen das verbleibende Hintergrundgeräusch. Die Dämpfung der Geräuschreduktion kann somit langsamer wieder eingefügt werden als sie zu Beginn der Sprachpassage zurückgenommen wurde.

Neben der zeitlichen Verdeckung kann auch der Effekt der Frequenz- bzw. der Simultanverdeckung zur Verringerung von Sprachverzerrungen ausgenutzt werden. Zu diesem Zweck werden die geschätzten Signalleistungen psychoakustisch bewertet.

Im Gegensatz zu Sprachcodierungsverfahren (z.B. MPEG-Audio-Codierung) wird hier von einem sehr einfachen psychoakustischen Modell ausgegangen. Da in den niedrigen Frequenzbereichen oftmals nur sehr schlechte Signal-Geräusch-Verhältnisse anzutreffen sind, wird die Suche nach Maskierungssignalen nur im ersten Teilband

$$\left( \Omega \in \left[ \frac{\pi}{N}, \frac{3\pi}{N} \right] \right)$$ durchgeführt. Höherfrequente

Bereiche werden aus Aufwandsgründen nicht in die Suche mit einbezogen. Die Mithörschwelle wird vom Maskierungssignal unabhängig angenommen und durch eine logarithmische Kennlinie angenähert.

Für die modifizierten Schätzungen der Kurzzeitteilbandleistungen ergibt sich damit im untersten Teilband (p = 0):

$$\overline{\left| \widetilde{x}^{(r)}_0(n) \right|} = Max \left\{ \overline{\left| x^{(r)}_0(n) \right|}, \gamma_{ver} \ \gamma_{abs} \ \overline{\left| x^{(r)}_1(n) \right|} \right\}.$$

Für die oberen Teilbänder $\mu \in \left( \left\{ 2 ... \frac{N}{2} \right\} \right)$ ergibt sich entsprechend:

$$\overline{\left| \widetilde{x}^{(r)}_\mu(n) \right|} = Max \left\{ \overline{\left| x^{(r)}_\mu(n) \right|}, (\gamma_{ver})^{\mu-1} \ \gamma_{abs} \ \overline{\left| x^{(r)}_1(n) \right|} \right\}.$$

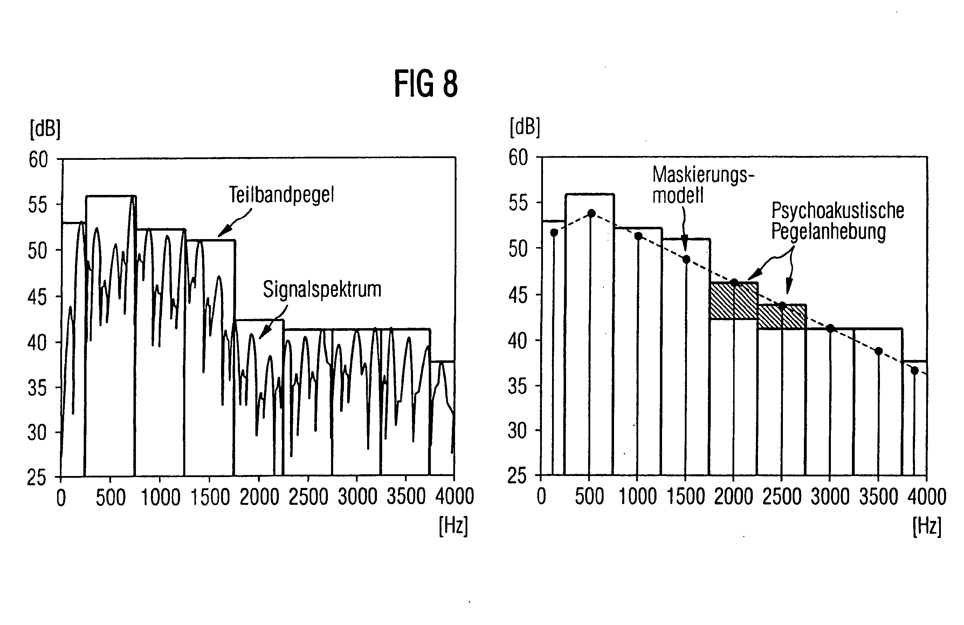

In Fig. 8 ist die verwendete psychoakustische Gewichtung noch einmal schematisch dargestellt. Im linken Teil der Abbildung ist das Spektrum eines kurzen Ausschnitts (128 Takte) aus einem Sprachsignal sowie die mittleren Teilbandpegel (Balken) dargestellt. Ausgehend vom ersten Teilband (250 Hz bis 750 Hz bei $f_{ab}$= 8 kHz und N = 16) wird eine Maskierungskurve generiert. Hierzu wird der Pegel im Band $\mu$ = 1 zunächst um den Faktor $\gamma_{abs}$ abgesenkt. Ausgehend von diesem Referenzpunkt werden die Mithörschwellen durch logarithmisch abfallende Kurven angenähert. Dies ist im rechten Teil der Abbildung durch die Punkte symbolisiert. Liegen die gemessenen Teilbandpegel unterhalb der angenäherten Mithörschwelle, so erfolgt durch Maximumbildung eine künstliche Anhebung.

Zur Schätzung der Hintergrundgeräuschleistungen wird eine sog. Minimumstatistik ausgewertet. Dieses Verfahren benötigt im Gegensatz zu den meisten anderen Verfahren zur Geräuschschätzung keinen Sprachpausendetektor.

Das implementierte Verfahren zur Geräuschleistungsschätzung verwendet Schätzfenster der Länge $N_{MS}$ (r $N_{MS}$) Takte. Innerhalb eines solchen Fensters wird durch Vergleichsoperationen das Minimum der geschätzten Eingangsleistung in jedem Teilband bestimmt:

$$\overline{\left|n_{\mu,akt}^{(r)}(n)\right|} = \begin{cases} Min\left\{\overline{\left|x_{\mu}^{(r)}(n)\right|}, \quad \overline{\left|n_{\mu,akt}^{(r)}(n-1)\right|}\right\} & \textit{falls } n \bmod N_{MS} \not\equiv 1 \\ \overline{\left|x_{\mu}^{(r)}(n)\right|}, & \textit{sonst} \end{cases}$$

Die Geräuschschätzung wird mehrstufig ausgeführt, d.h. die Minima der vergangenen $M_{MS}$ Schätzfenster werden gespeichert. Das Erneuern der gespeicherten Blockminima erfolgt gerade einen Unterabtasttakt bevor in Gleichung 2.4 die Erneuerungsbedingung ($n \bmod N_{MS} \equiv 1$) erfüllt ist. Die vergangenen Minima $\overline{\left|n_{\mu,1}^{(r)}(n)\right|}$ bis $\overline{\left|n_{\mu,M_{MS}}^{(r)}(n)\right|}$ werden gemäß der folgenden Speichervorschrift gesichert:

$$\overline{\left|n_{\mu,M_{MS}}^{(r)}(n)\right|} = \begin{cases} \overline{\left|n_{\mu,M_{MS}-1}^{(r)}(n-1)\right|}, & \textit{falls } n \bmod N_{MS} \equiv 1 \\ \overline{\left|n_{\mu,M_{MS}}^{(r)}(n-1)\right|}, & \textit{sonst} \end{cases}$$

$$\overline{\left|n_{\mu,2}^{(r)}(n)\right|} = \begin{cases} \overline{\left|n_{\mu,1}^{(r)}(n-1)\right|}, & \textit{falls } n \bmod N_{MS} \equiv 1 \\ \overline{\left|n_{\mu,2}^{(r)}(n-1)\right|}, & \textit{sonst} \end{cases}$$

$$\overline{\left|n_{\mu,1}^{(r)}(n)\right|} = \begin{cases} \overline{\left|n_{\mu,akt}^{(r)}(n)\right|}, & \textit{falls } n \bmod N_{MS} \equiv 1 \\ \overline{\left|n_{\mu,1}^{(r)}(n-1)\right|}, & \textit{sonst} \end{cases}$$

Die eigentliche Schätzung der Geräuschleistung in jedem Teilband erfolgt durch eine Minimumsuche über die gespeicherten Blockminima und das aktuelle Blockminimum:

$$\overline{\left|n_{\mu,abs}^{(r)}(n)\right|} = \begin{cases} Min\left\{\overline{\left|n_{\mu,1}^{(r)}(n)\right|},...,\overline{\left|n_{\mu,M_{MS}}^{(r)}(n)\right|}\right\}, & \textit{falls } n \bmod N_{MS} \equiv 1 \\ Min\left\{\overline{\left|n_{\mu,akt}^{(r)}(n)\right|}, \overline{\left|n_{\mu,abs}^{(r)}(n-1)\right|}\right\}, & \textit{sonst} \end{cases}$$

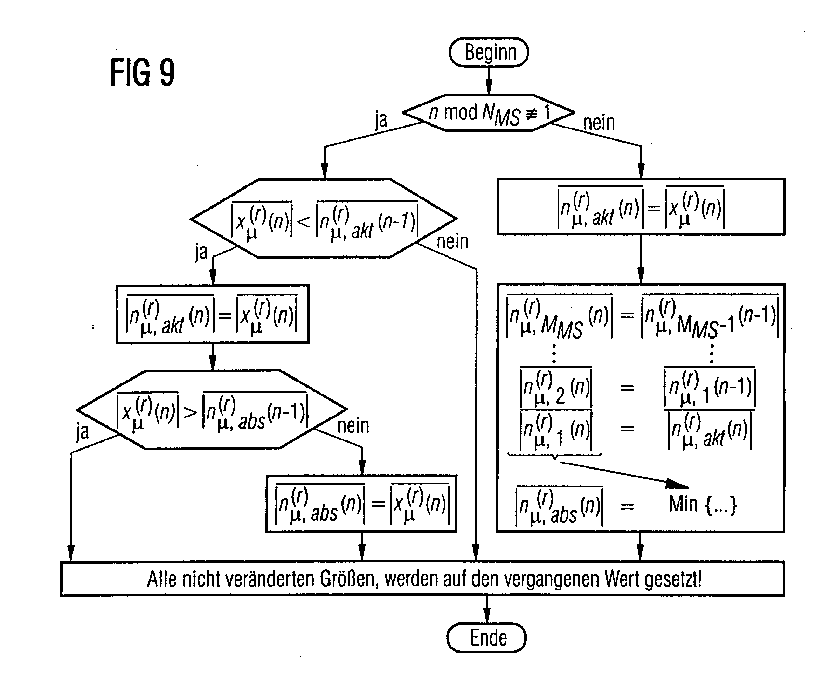

Durch diese Form der Minimumsuche kann der Berechnungsaufwand minimal gehalten werden. Pro Unterabtastung und Teilband sind zunächst nur zwei Vergleiche durchzuführen. Hiermit werden die Größen $\overline{\left|n_{\mu,akt}^{(r)}(n)\right|}$ und $\overline{\left|n_{\mu,abs}^{(r)}(n)\right|}$ a aktualisiert. Erst wenn $N_{MS}$ neue Signalwerte eingetroffen sind, erfolgt eine weitere Aktualisierung. Die vergangenen Blockminima werden lediglich "weitergeschoben" und das aktuelle Blockminimum wird in den ersten Verzögerungsspeicher kopiert. In Fig. 9 ist die Struktur der Berechnung dargestellt.

Das "Gedächtnis" der hier vorgestellten Geräuschleistungsschätzung variiert mit der Zeit - das minimale Gedächtnis bezieht sich auf ($r\,N_{MS}\,M_{MS}$) Gesamtbandtakte, maximal kann auf die vergangenen ($r\,N_{MS}\,(M_{MS}+1)$) Gesamtbandtakte zurückgegriffen werden. Die mittlere Gedächtnisdauer von ($r\,N_{MS}\,(M_{MS}+\frac{1}{2})$) sollte so groß gewählt werden, daß mit großer Wahrscheinlichkeit zumindest eine Sprachpause enthalten ist. Andererseits darf das Gedächtnis nicht zu groß gewählt werden, da sonst einem Anstieg der Geräuschleistung nur verspätet gefolgt werden kann. Zeiträume von 3 bis 5 Sekunden haben sich hier als akzeptabel herausgestellt.

Sollte mit den bisherigen Schätzwerten für die Summensignalleistungen und die Geräuschleistungen ein Geräuschreduktionsfilter gemäß einem Wiener-Ansatz im Frequenzbereich eingestellt werden, so führen die unterschiedlichen "Trägheiten" der Schätzungen zu hörbaren Artefakten. In Passagen ohne Sprachaktivität folgen die Summenleistungsschätzungen den Kurzzeitschwankungen der Geräuschpegel relativ schnell - die Geräuschschätzungen detektieren lediglich die Minima und sind daher näherungsweise konstant. Die resultierenden Dämpfungen sind in solchen Passagen zwar relativ hoch, die Pegelschwankungen der Summensingalschätzer führen aber dennoch zu geringen Schwankungen der Dämpfungsfaktoren. Am Ausgang der Geräuschreduktion ist dies als sog. "musical tones" zu hören.

Bisher bekannte Verfahren zur Sprachverbesserung verwenden zur Vermeidung dieser Artefakte eine Glättung der Summensignalpegel in Fequenzrichtung. Hierbei werden meist IIR-Filter erster Ordnung mit niedriger Glättungskonstante oder nichtlineare Medianfilter niedriger Ordnung eingesetzt.

In dem hier beschriebenen Verfahren wird ein anderer Weg eingeschlagen - es werden nicht die Summensignalpegel sondern die Geräuschpegelschätzungen in einer weiteren Verfahrensstufe verändert.

Die Geräuschleistungsschätzwerte werden zunächst logarithmiert. Hierzu wurde eine spezielle Hardware-Logarithmierung, welche in "A. Hauenstein: Implementierung eines Freisprechalgorithmus auf dem Siemens DSP-Core SPC, Diplomarbeit D 103, Darmstadt, 1995" beschrieben ist, verwendet. Im folgenden wird diese Funktion durch LOG (...) abgekürzt, es gilt näherungsweise:

$$LOG(x) \approx K\,\log_{10}|x|.$$

Die nichtlineare Geräuschpegelanhebung wird wie folgt durchgeführt:

$$LOG\left(\overline{\left|\widetilde{n}_{\mu}^{(r)}(n)\right|}\right) \;=\; LOG\left(\overline{\left|n_{\mu.abs}^{(r)}(n)\right|}\right) + \Delta_{LOG}^{(r)}(n)$$

mit $\mu \in \left\{0,...,\dfrac{N}{2}\right\}.$

Die Pegelanhebung $\Delta_{LOG}^{(r)}(n)$ wird in allen Teilbändern gleichermaßen verwendet. Sobald eine Sprachaktivität in dem verrauschten Summensignal festgestellt wird, erfolgt eine schnelle Absenkung der Pegelanhebung. Sollte keine Sprachaktivität detektiert werden, erfolgt ein langsames Anheben der Größe $\Delta_{n.LOG}(n)$. Die Pegelanhebung wird sowohl durch einen Maximalwert als auch durch einen Minimalwert begrenzt:

$$\Delta_{LOG}^{(r)}(n) = \begin{cases} Min\left\{\Delta_{Max.}\left(\Delta_{LOG}^{(r)}(n-1)+\Delta_{ink}\right)\right\}, falls\; \overline{\left|x_2^{(r)}(n)\right|} < K_\Delta\, \overline{\left|x_{2.abs}^{(r)}(n)\right|} \\ Max\left\{\Delta_{Min.}\left(\Delta_{LOG}^{(r)}(n-1)-\Delta_{dek}\right)\right\}, sonst \end{cases}.$$

Durch die additive Nachführung der Pegelanhebung können kurzzeitige Fehldetektionen der Sprachaktivitätserkennung toleriert werden. Für das Pegelinkrement $\Delta_{ink}$ bzw. für das Pegeldekrement $\Delta_{dek}$ gilt:

$$\Delta_{ink} < \Delta_{dek} \; .$$

Für die beiden Begrenzungswerte $\Delta_{Min}$ und $\Delta_{Max}$ haben sich folgende Einstellungen bewährt:

$$\Delta_{Min} \; \approx \; 5dB,$$

$$\Delta_{Max} \; \approx 20dB.$$

Die Untergrenze von etwa 5 dB gleicht dem systematischen Fehler, der durch die Minimumbestimmung bei der Geräuschschätzung entsteht, wieder aus. Diese Korrektur hängt vor allem von den Zeitkonstanten der IIR-Glättungsfilter ab - bei Veränderungen der Zeitkonstanten sollte die Untergrenze erneut angepaßt werden. Die Entscheidung, ob Sprachaktivität detektiert wird, hängt von der Wahl der Konstante $K_\triangle$ ab. Hierbei sollte die Summensignalleistung mindestens etwa 15 dB über der geschätzten Geräuschleistung liegen, um ein Absenken der Pegelanhebung auszulösen. Für die Konstante $K_\triangle$ gilt somit:

$$K_\triangle \approx 5.$$

Für die Reduktion der Hintergrundgeräusche werden zunächst die Unterdrückungsfaktoren in jedem Teilband $b_\mu^{(r)}(n)$ bestimmt. Hierfür wird nach einem parametrisierten Wiener-Ansatz vorgegangen.

Das hier vorgestellte Verfahren verwendet die folgende Kennlinie zur Bestimmung der Teilbandfaktoren:

$$b_\mu^{(r)}(n) = Max\left\{b_{Min}, \left[\alpha_{DA}^{(r)}(n)\left(1 - LIN\left\{b_{\mu,LOG}^{(r)}(n)\right\}\right)\right]\right\}.$$

Die errechneten Dämpfungsfaktoren werden auf einen linearen Minimalwert $b_{Min}$ begrenzt. Bei zu klein gewählten Begrenzungswerten nehmen die Sprachverzerrungen zu. Außerdem verliert der ferne Gesprächsteilnehmer den akustischen Umgebungseindruck. Eine Begrenzung von etwa 20 dB hat sich hier als günstiger Wert herausgestellt. Es läßt sich damit eine Sprachverbesserung erzielen, ohne zu große Sprachverzerrungen zu erhalten. Außerdem bleibt die akustische Hintergrundinformation (z.B. der Teilnehmer befindet sich in einem Kfz) erhalten, ohne daß die vorhandenen Restgeräusche die Unterhaltung störend beeinträchtigen.

Die Berechnung der eigentlichen Unterdrückungsfaktoren wird mit logarithmischen Größen durchgeführt. Vor der Begrenzung müssen diese Werte wieder in den linearen Bereich überführt werden. Dies geschieht analog zur Logarithmierung mit einer Näherungsform, die in "A. Hauenstein: Implementierung eines Freisprechalgorithmus auf dem Siemens DSP-Core SPC, Diplomarbeit D 103, Darmstadt, 1995" erläutert ist:

$$LIN(x) \approx 10^{x/K} \; .$$

Die Konstante K ist dabei die gleiche wie bei der Logarithmierung. Vor der Begrenzung der Hilfsgrößen wird ein Dämpfungsausgleich $\overline{\alpha_{DA}^{(r)}(n)}$ einmultipliziert. Die Bestimmung dieser Größe ist weiter unten beschrieben. Hiermit soll ein annähernd gleiches Lautheitsempfinden für das geräuschreduzierte und das geräuscherfüllte Signal erreicht werden.

Die logarithmischen Größen $b_{\mu,LOG}^{(r)}(n)$ werden wie folgt bestimmt:

$$b_{0,LOG}^{(r)}(n) = Min\left\{0, \beta_{us,0}\left[LOG\left(\left\|\widetilde{n}_0^{(r)}(n)\right\|\right) - LOG\left(\left\|\widetilde{x}_0^{(r)}(n)\right\|\right)\right]\right\},$$

$$b_{v,LOG}^{(r)}(n) = Min\left\{0, \beta_{us,1}\left[LOG\left(\left\|\widetilde{n}_v^{(r)}(n)\right\|\right) - LOG\left(\left\|\widetilde{x}_v^{(r)}(n)\right\|\right)\right]\right\},$$

mit

$$v \in \left\{1, ..., \frac{N}{2}\right\}.$$

Durch die sog. Überschätzungsfaktoren $\beta_{us,0}$ und $\beta_{us,1}$ kann die "Aggressivität" der Geräuschunterdrückung beeinflußt werden. Sollten diese Faktoren größer als eins gewählt werden, wird die Pegeldifferenz zwischen der Summensignalpegel- und der Geräuschpegelschätzung künstlich vergrößert und es wird mehr Dämpfung eingefügt. Da die meisten Fahrzeuggeräusche in niedrigen Frequenzbereichen zu einem sehr schlechten Signal-Geräusch-Verhältnis führen, kann die Überschätzungseinstellung im niedrigsten Teilband (0 Hz bis 250 Hz bei N = 16 und $f_{ab}$ = 8 kHz) getrennt von den übrigen Teilbändern gewählt werden. Durch die Begrenzung wird verhindert, daß die endgültigen Faktoren $b_{\mu}^{(r)}(n)$ einen Wert größer als eins annehmen können.

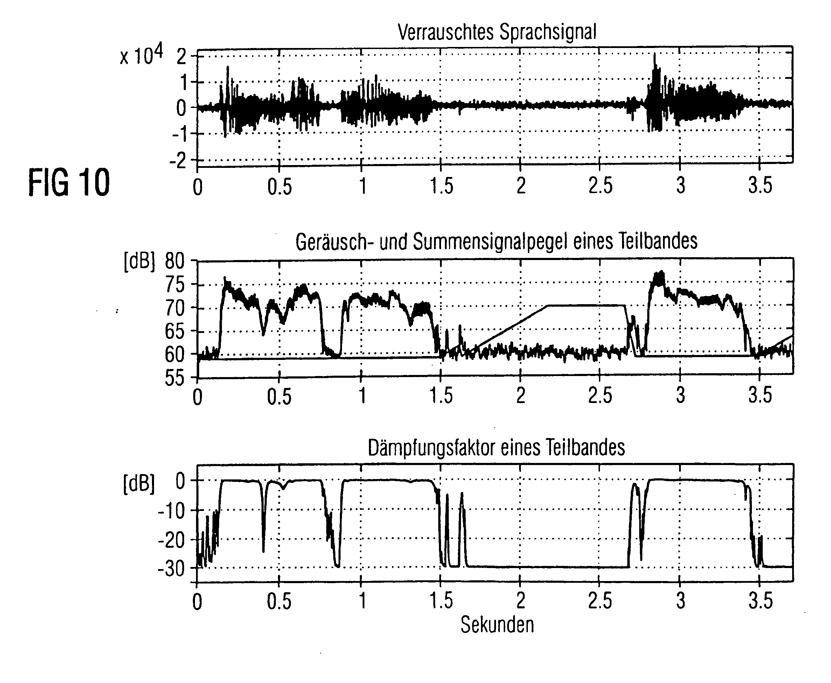

In Fig. 10 ist ein Beispielverlauf für die Dämpfung in einem Teilband skizziert. Ausgehend von dem verrauschten Gesamtbandsignal, welches im oberen Teil der Fig. 10 dargestellt ist, sind zunächst die geschätzten und bewerteten Kurzzeitleistungen des Summensignals $LOG\left(\left\|\widetilde{x}_{\mu}^{(r)}(n)\right\|\right)$ und des Geräusches $LOG\left(\left\|\widetilde{n}_{\mu}^{(r)}(n)\right\|\right)$ dargestellt (mittlerer Teil der Abbildung). Die nichtlineare Geräuschpegelanhebung ist im Bereich von 1,5 Sekunden bis 2,7 Sekunden deutlich zu erkennen. Zu Beginn des Sprachsignals wurde die Geräuschanhebung nicht aktiviert. Die hieraus resultierenden Dämpfungsschwankungen (musical tones) sind im unteren Teil der Abbildung im Bereich von 0 Sekunden bis 0,15 Sekunden deutlich zu erkennen. Die Geräuschreduktion wurde auf einen Maximalwert der Dämpfung von 30 dB begrenzt.

Durch den folgenden Teil des Verfahrens wird versucht, die Teilbanddämpfungsfaktoren so zu beeinflussen, daß ein gleiches Lautheitsempfinden des geräuscherfüllten und des geräuschreduzierten Signals hervorgerufen wird. Hierbei wird davon ausgegangen, daß das gestörte Sprachsignal zumindest in kurzen Zeit- und Frequenzabschnitten einen größeren Nutzsignalpegel aufweist als das Hintergrundgeräusch. Um den benötigten Rechenaufwand gering zu halten, wird lediglich im zweiten Teilband nach leistungsstarken Signalanteilen gesucht. Sollte die Kurzzeitleistung in diesem Teilband um einige Dezibel über dem geschätzten Hintergrundgeräuschpegel liegen, so wird zunächst ein Dämpfungsfaktor ohne Biasausgleich $b_{2,DA}^{(r)}(n)$ bestimmt. Dieser wird dann invertiert und einer rekursiven Glättung zugeführt:

$$\overline{\alpha_{DA}^{(r)}(n)} = \begin{cases} (1 - \beta_{DA})\dfrac{1}{b_{2,DA}^{(r)}(n)} + \beta_{DA}\,\overline{\alpha_{DA}^{(r)}(n-1)}, & falls\; \left|\overline{x_2^{(r)}(n)}\right| > K_{DA}\,\left|\overline{n_2^{(r)}(n)}\right| \\[2ex] \overline{\alpha_{DA}^{(r)}(n-1)}, & sonst \end{cases},$$

mit $0 \leq \beta_{DA} \leq 1$.

Der vorläufige Teilbanddämpfungsfaktor wird wie folgt bestimmt:

$$b_{2,DA}^{(r)}(n) \;=\; Max\left\{ b_{Min,}\left[ \left(1 - LIN\left\{ b_{2,LOG}^{(r)}(n)\right\}\right)\right]\right\}$$

mit

$$b_{2,LOG}^{(r)}(n) \;=\; Min\left\{ 0, \beta_{us,1}\left[ LOG\left(\left|\overline{\tilde{n}_2^{(r)}(n)}\right|\right) - LOG\left(\left|\overline{\tilde{x}_2^{(r)}(n)}\right|\right)\right]\right\}.$$

Die Größe $b_{2,LOG}^{(r)}(n)$ kann dabei als Zwischenergebnis aus der Teilbandkoeffizientenbestimmung übernommen werden.

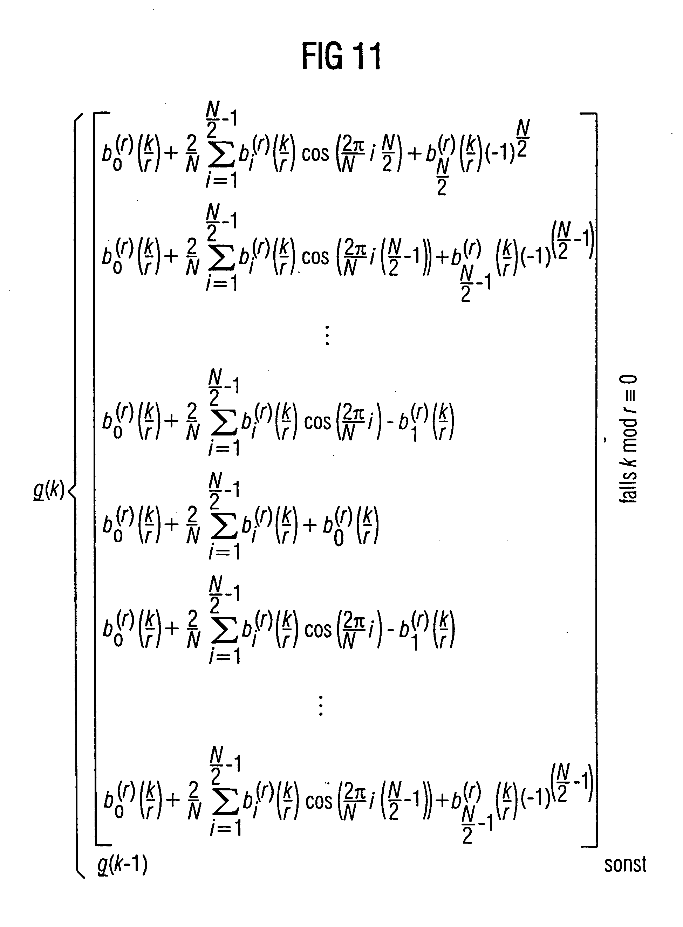

In einem letzten Verfahrensabschnitt werden aus den bisher berechneten Teilbandkoeffizienten die Gesamtbandfilterkoeffizienten bestimmt. Die unterschiedlichen Abtastraten werden durch einfaches Beibehalten der alten Gesamtbandkoeffizienten überbrückt. Da sich die Teilbandkoeffizienten durch die IIR-Glättungen nur sehr langsam ändern, wird auf eine aufwendige Anti-Imaging-Filterung verzichtet. Die Filterkoeffizienten werden gemäß der in Fig. 11 dargestellten Berechnungsform eingestellt. Bei dieser Berechnungsform wurden die Reellwertigkeit und die Symmetrie der Teilbandkoeffizienten verwendet.

## Patentansprüche

1. Vorrichtung zur Geräuschunterdrückung in Fernsprecheinrichtungen, wobei im Sendepfad der Fernsprecheinrichtung ein zusätzliches Filter mit kurzer Laufzeit angeordnet ist; **dadurch gekennzeichnet, daß** das zusätzliche Filter einstellbare Koeffizienten aufweist und eine Steuerschaltung zur Einstellung der Koeffizienten vorgesehen ist; und das zusätzliche Filter im Vollbandbereich arbeitet, während die Steuerschaltung zur Koeffizienteneinstellung im Teilbandbereich arbeitet.

2. Vorrichtung nach Anspruch 1, **dadurch gekenn-zeichnet, daß** auch im Empfangspfad der Fernsprecheinrichtung ein solches zusätzliches Filter mit kurzer Laufzeit angeordnet ist.

3. Vorrichtung nach Anspruch 1 oder 2, **dadurch ge-kennzeichnet, daß** das oder die zusätzlichen Filter eine Gruppenlaufzeit von $\leq$ 2 ms aufweisen.

4. Vorrichtung nach Anspruch 1, **dadurch gekenn-zeichnet,** daß in der Steuerschaltung das Eingangssignal mit einer DFT-modulierten Polyphasenfilterbank (130) mit phasenminimalem Prototyptiefpaßfilter verbunden ist.

5. Vorrichtung nach Anspruch 4, **dadurch gekenn-zeichnet**, daß die unterabgetasteten Ausgangssignale der Polyphasenfilterbank (130) an eine Kurzzeitleistungsschätzungsvorrichtung (132) angeschlossen sind.

6. Vorrichtung nach Anspruch 5, **dadurch gekenn-reichnet,** daß die Ausgänge der Kurzzeitleistungsschätzungsvorrichtung (132), die die Schätzwerte der Teilbandleistungen tragen, mit einer Vorrichtung zur Schätzung der Leistungen des Hintergrundgeräusches und einer Vorrichtung (134) zur psychoakustischen Gewichtung der gestörten Teilbandleistungen verbunden sind.

7. Vorrichtung nach Anspruch 6, **dadurch gekenn-zeichnet**, daß die Ausgänge der Vorrichtung zur Schätzung der Leistungen des Hintergrundgeräusches über eine Vorrichtung zur nichtlinearen Anhebung der Geräuschsignale und die Ausgänge der Vorrichtung (134) zur psychoakustischen Gewichtung direkt mit einer Vorrichtung zur Berechnung der Teilbandgewichtungsfaktoren verbunden sind.

8. Vorrichtung nach Anspruch 7, **dadurch gekenn-zeichnet,** daß die Ausgänge der Vorrichtung zur Berechnung der Teilbandgewichtungsfaktoren mit einer Vorrichtung zur modifizierten inversen diskreten Fouriertransformation verbunden sind, deren Ausgang mit dem Koeffizienteneingang des oder der zusätzlichen Filter (31, 33) verbunden ist.

9. Vorrichtung nach Anspruch 7 oder 8, **dadurch ge-kennzeichnet**, daß zumindest ein Teil der Ausgänge der Kurzzeitleistungsschätzungsvorrichtung (132) mit einer Vorrichtung (136) zum Dämpfungsausgleich verbunden sind, deren Ausgang mit einem Steuereingang der Vorrichtung zur Berechnung der Teilbandgewichtungsfaktoren verbunden ist.

10. Vorrichtung nach Anspruch 1, 2 oder 3, **dadurch gekennzeichnet, daß** es sich bei dem oder den zusätzlichen Filtern (31, 33) um kurze Transversalfilter handelt, vorzugsweise mit einer sehr geringen Ordnung $\leq 20$.

11. Verfahren zur Geräuschunterdrückung in Fernsprecheinrichtungen, wobei das Sendesignal der Fernsprecheinrichtung einer zusätzlichen Filterung mit kurzer Laufzeit unterworfen wird; **dadurch gekennzeichnet, daß** die zusätzliche Filterung mit einstellbaren Koeffizienten gesteuert wird; und die Filterung im Vollbandbereich durchgeführt wird, während die Bestimmung der Koeffizienten im Teilbandbereich durchgeführt wird.

12. Verfahren nach Anspruch 11, **dadurch gekenn-zeichnet,** daß auch das Empfangssignal der Fernsprecheinrichtung einer solchen zusätzlichen Filterung mit kurzer Laufzeit unterworfen wird.

13. Verfahren nach Anspruch 11 oder 12, **dadurch ge-kennzeichnet**, daß die Gruppenlaufzeit für die zusätzlichen Filterungen auf weniger als 2 ms eingestellt wird.

14. Verfahren nach Anspruch 11, 12 oder 13, **dadurch gekennzeichnet, daß** die Filterung mittels kurzer Transversalfilter (31, 33) durchgeführt wird, deren Ordnung vorzugsweise < 20 ist.

15. Verfahren nach Anspruch 11, **dadurch gekenn-zeichnet**, daß mehrere, unterschiedliche Abtastraten innerhalb des Verfahrens verwendet werden.

16. Verfahren nach Anspruch 11, **dadurch gekenn-zeichnet**, daß die Bestimmung der Koeffizienten mittels einer Teilbandanalyse und einer Rücktransformation mittels einer modifizierten inversen diskreten Fouriertransformation (DFT) erfolgt.

17. Verfahren nach Anspruch 16, **dadurch gekenn-zeichnet**, daß die modifizierte diskrete Fouriertransformation auf die Teilbandfilterkoeffizienten angewendet wird.

18. Verfahren nach Anspruch 16 oder 17, **dadurch ge-kennzeichnet**, daß die Teilbandanalyse mittels einer Filterbank (130) in Frequenzteilbändern implementiert wird.

19. Verfahren nach Anspruch 18, **dadurch gekenn-zeichnet**, daß die Filterbank (130) als DFT-modulierte Polyphasenfilterbank mit phasenminimalem Prototyptiefpaßfilter ausgeführt wird.

20. Verfahren nach einem der Ansprüche 16 bis 19, **da-durch gekennzeichnet**, daß bei der Bestimmung der Koeffizienten zusätzlich eine Kurzzeitleistungsschätzung mittels nichtlinearer Betragsglättungen der Teilbandsignale durchgeführt wird.

21. Verfahren nach Anspruch 20, **dadurch gekennzeichnet, daß** bei der Bestimmung der Koeffizienten zusätzlich eine psychoakustische Gewichtung (134) der geschätzten Summensignalleistungen durchgeführt wird.

22. Verfahren nach Anspruch 20 oder 21, **dadurch gekennzeichnet, daß** bei der Bestimmung der Koeffizienten zusätzlich eine nichtlineare Anhebung der Geräuschleistungsschätzungen durchgeführt wird.

23. Verfahren nach Anspruch 20, 21 oder 22, **dadurch gekennzeichnet, daß** bei der Bestimmung der Koeffizienten zusätzlich eine automatische Verstärkungssteuerung (136) verwendet wird, welche die Filterkoeffizienten so gewichtet, daß das geräuscherfüllte und das geräuschreduzierte Signal ein näherungsweise gleiches Lautheitsempfinden hervorrufen.

**Claims**

1. Device for suppressing noise in telephone equipment, an additional filter with a short propagation time being arranged in the transmission path of the telephone equipment; **characterized in that** the additional filter has adjustable coefficients and a control circuit for adjusting the coefficients is provided; and the additional filter operates in the full band, while the control circuit for adjusting the coefficients operates in the subband.

2. Device according to Claim 1, **characterized in that** such an additional filter with a short propagation time is also arranged in the receiving path of the telephone equipment.

3. Device according to Claim 1 or 2, **characterized in that** the additional filter or filters have a group propagation time of $\leq 2$ ms.

4. Device according to Claim 1, **characterized in that** in the control circuit, the input signal is connected to a DFT modulated polyphase filter bank (130) with a phase-minimal prototype low-path filter.

5. Device according to Claim 4, **characterized in that** the undersampled output signals from the polyphase filter bank (130) are connected to a short-term power estimation device (132).

6. Device according to Claim 5, **characterized in that** the outputs from the short-term power estimation device (132) which carry the estimated values of the subband powers are connected to a device for estimating the powers of the background noise and to a device (134) for the psycho-acoustic weighting of the disturbed subband powers.

7. Device according to Claim 6, **characterized in that** the outputs from the device for estimating the powers of the background noise are connected, via a device for the nonlinear emphasis of the noise signals, and the outputs from the device (134) for psycho-acoustic weighting are connected directly to a device for calculating the subband weighting factors.

8. Device according to Claim 7, **characterized in that** the outputs from the device for calculating the subband weighting factors are connected to a device for modified inverse discrete Fourier transformation, whose output is connected to the coefficient input of the additional filter or filters (31, 33).

9. Device according to Claim 7 or 8, **characterized in that** at least some of the outputs from the short-term power estimation device (132) are connected to a device (136) for attenuation equalization, whose output is connected to a control input of the device for calculating the subband weighting factors.

10. Device according to Claim 1, 2 or 3, **characterized in that** the additional filter or filters (31, 33) is or are short transversal filters, preferably of a very low order of $\leq 20$.

11. Method for noise suppression in telephone equipment, the transmitted signal from the telephone equipment being subjected to additional filtering with a short propagation time; **characterized in that** the additional filtering is controlled by adjustable coefficients; and the filtering is carried out in the full band, while the determination of the coefficients is carried out in the subband.

12. Method according to Claim 11, **characterized in that** the received signal from the telephone equipment is also subjected to such additional filtering with a very low propagation time.

13. Method according to Claim 11 or 12, **characterized in that** the group propagation time for the additional filtering is adjusted to less than 2 ms.

**14.** Method according to Claim 11, 12 or 13, **characterized in that** the filtering is carried out by means of short transversal filters (31, 33) whose order is preferably < 20.

**15.** Method according to Claim 11, **characterized in that** a plurality of different sampling rates are used within the method.

**16.** Method according to Claim 11, **characterized in that** the determination of the coefficients is carried out by means of a subband analysis and reverse transformation by means of a modified inverse discrete Fourier transformation (DFT).

**17.** Method according to Claim 16, **characterized in that** the modified discrete Fourier .transformation is applied to the subband filter coefficients.

**18.** Method according to Claim 16 or 17, **characterized in that** the subband analysis is implemented in frequency subbands by means of a filter bank (130).

**19.** Method according to Claim 18, **characterized in that** the filter bank (130) is designed as a DFT modulated polyphase filter bank with a phase-minimal prototype low-pass filter.

**20.** Method according to one of Claims 16 to 19, **characterized in that** a short-term power estimate by means of nonlinear amplitude smoothing of the subband signals is also made when determining the coefficients.

**21.** Method according to Claim 20, **characterized in that**, during the determination of the coefficients, psycho-acoustic weighting (134) of the estimated total signal powers is additionally carried out.

**22.** Method according to Claim 20 or 21, **characterized in that** nonlinear emphasis of the noise power estimates is additionally made when determining the coefficients.

**23.** Method according to Claim 20, 21 or 22, **characterized in that**, when determining the coefficients, automatic gain control (136) is additionally used, which weights the filter coefficients in such a way that the noise-filled and the noise-reduced signal cause an approximately equal loudness sensation.

**Revendications**

**1.** Dispositif de suppression de bruit dans des installations téléphoniques, un filtre supplémentaire avec un temps de propagation court étant disposé dans la voie d'émission de l'installation téléphonique, **caractérisé en ce que** le filtre supplémentaire comprend des coefficients réglables et qu' un circuit de commande de réglage des coefficients est prévu ; et que le filtre supplémentaire travaille en pleine bande alors que le circuit de commande de réglage des coefficients travaille en bande partielle.

**2.** Dispositif selon la revendication 1, **caractérisé en ce qu'**un tel filtre supplémentaire avec un temps de propagation court est également disposé dans la voie de réception de l'installation téléphonique.

**3.** Dispositif selon la revendication 1 ou 2, **caractérisé en ce que** le ou les filtres supplémentaires comportent un temps de propagation de groupe $\leq$ 2 ms.

**4.** Dispositif selon la revendication 1, **caractérisé en ce que** dans le circuit de commande, le signal d'entrée est relié avec un banc de filtre polyphase (130) modulé par DFT avec filtre passe-bas prototype à phase minimale.

**5.** Dispositif selon la revendication 4, **caractérisé en ce que** les signaux de sortie sous-échantillonnés du banc de filtre polyphase (130) sont connectés à un dispositif d'estimation de puissance instantanée (132).

**6.** Dispositif selon la revendication 5, **caractérisé en ce que** les sorties du dispositif d'estimation de puissance instantanée (132) qui portent les valeurs d'estimation des puissances de bande partielle, sont reliées avec un dispositif d'estimation des puissances de bruit de fond et un dispositif (134) de pondération psycho-acoustique des puissances de bande partielle perturbées.

**7.** Dispositif selon la revendication 6, **caractérisé en ce que** les sorties du dispositif d'estimation des puissances de bruit de fond, via un dispositif d'accentuation non linéaire des signaux de bruit, et les sorties du dispositif (134) de pondération psycho-acoustique sont directement reliées avec un dispositif de calcul des facteurs de pondération de bande partielle.

**8.** Dispositif selon la revendication 7, **caractérisé en ce que** les sorties du dispositif de calcul des facteurs de pondération de bande partielle sont reliées avec un dispositif pour la transformation de Fourier discrète inverse modifiée dont la sortie est reliée avec l'entrée de coefficients du ou des filtres supplémentaires (31, 33).

**9.** Dispositif selon la revendication 7 ou 8, **caractérisé en ce qu'**au moins une partie des sorties du dispositif d'estimation de puissance instantanée (132) est reliée avec un dispositif (136) pour la correction de l'atténuation dont la sortie est reliée avec une entrée de commande du dispositif de calcul des facteurs de pondération de bande partielle.

**10.** Dispositif selon la revendication 1, 2 ou 3, **caractérisé en ce que** en ce qui concerne le ou les filtres supplémentaires (31, 33) il s'agit de filtres transversaux courts, de préférence avec un très faible ordre ≤ 20.

**11.** Procédé de suppression de bruit dans des installations téléphoniques, le signal d'émission de l'installation téléphonique étant soumis à un filtrage supplémentaire avec un temps de propagation court, **caractérisé en ce que** le filtrage supplémentaire est commandé avec des coefficients réglables et le filtrage est réalisé en pleine bande alors que la détermination des coefficients est réalisée dans la zone de bande partielle.

**12.** Procédé selon la revendication 11, **caractérisé en ce qu'**aussi le signal de réception de l'installation téléphonique est soumis à un tel filtrage supplémentaire avec un temps de propagation court.

**13.** Procédé selon la revendication 11 ou 12, **caractérisé en ce que** le temps de propagation de groupe pour le filtrage supplémentaire est réglé sur moins de 2 ms.

**14.** Procédé selon la revendication 11, 12 ou 13, **caractérisé en ce que** le filtrage est réalisé au moyen de filtres transversaux (31, 32) courts dont l'ordre est de préférence < 20.

**15.** Procédé selon la revendication 11, **caractérisé en ce que** plusieurs fréquences d'échantillonnage différentes sont utilisées à l'intérieur du procédé.

**16.** Procédé selon la revendication 11, **caractérisé en ce que** la détermination des coefficients a lieu au moyen d'une analyse de bande partielle et d'une transformation inverse au moyen d'une transformation de Fourier discrète inverse modifiée (DFT).

**17.** Procédé selon la revendication 16, **caractérisé en ce que** la transformation de Fourier discrète modifiée est appliquée aux coefficients de filtre de bande partielle.

**18.** Procédé selon la revendication 16 ou 17, **caractérisé en ce que** l'analyse de bande partielle est implémentée à l'aide d'un banc de filtre (130) dans des bandes partielles de fréquence.

**19.** Procédé selon la revendication 18, **caractérisé en ce que** le banc de filtre (130) est réalisé comme un banc de filtre polyphase modulé par DFT avec un filtre passe-bas prototype à phase minimale.

**20.** Procédé selon une des revendications 16 à 19, **caractérisé en ce que** lors de la détermination des coefficients, de plus, une estimation de puissance instantanée au moyen de lissages non-linéaires de valeurs des signaux de bande partielle est réalisée.

**21.** Procédé selon la revendication 20, **caractérisé en ce que** lors de la détermination des coefficients, de plus, une pondération psycho-acoustique (134) des puissances de signal cumulées estimées est réalisée.

**22.** Procédé selon la revendication 20 ou 21, **caractérisé en ce que** lors de la détermination des coefficients, de plus, une accentuation non-linéaire des estimations de puissance de bruit est réalisée.

**23.** Procédé selon la revendication 20, 21 ou 22, **caractérisé en ce que** lors de la détermination des coefficients, de plus, une commande de gain (136) automatique est utilisé, qui évalue les coefficients de filtre de telle façon que le signal avec bruit et le signal réduit en bruit suscitent une sensation d'intensité de son approximativement égale.

**FIG 1**

ISDN-Verbindung

Digitale Signalverarbeitung

ALaw / Lin  14

D / A

V_LS

x(t)

Lautsprecher-Raum-Mikrophon-System  18

Lokaler Sprecher  20

n(t)

y(t)

ALaw / Lin  16

D / A

V_Mik

10

12

EP 1 155 561 B1

## FIG 2

ISDN-
Verbindung

ALaw / Lin

D / A

120
Ferner
Sprecher

Ferne
Hintergrundgeräusche

12

14
ALaw / Lin

Digitale
Signalverarbeitung

D / A

$V_{LS}$

$x(t)$

18

Lautsprecher-
Raum-
Mikrophon-
System

20
Lokaler
Sprecher

ISDN-
Verbindung

Klimaanlage

PC-Lüfter

10

16
ALaw / Lin

D / A

$V_{Mik}$

$y(t)$

EP 1 155 561 B1

# FIG 3

Verbindung zum fernen Teilnehmer

Geräusch-unter-drückung
31

24
AGC

18

Lautsprecher-Raum-Mikrophon-System

Pegel-waage

Steuerung

Echo-kompen-sation
28

Verbindung zum fernen Teilnehmer

26
AGC

Geräusch-unter-drückung
33

Post-filter
30

EP 1 155 561 B1

# FIG 4

# FIG 5

EP 1 155 561 B1

# FIG 6

FIG 7

EP 1 155 561 B1

# FIG 8

EP 1 155 561 B1

**FIG 9**

Beginn

$$n \bmod N_{MS} \neq 1$$

ja — nein

**ja branch:**

$$\left|x_\mu^{(r)}(n)\right| < \left|n_{\mu,\,akt}^{(r)}(n-1)\right|$$

ja / nein

$$\left|n_{\mu,\,akt}^{(r)}(n)\right| = \left|x_\mu^{(r)}(n)\right|$$

$$\left|x_\mu^{(r)}(n)\right| > \left|n_{\mu,\,abs}^{(r)}(n-1)\right|$$

ja / nein

$$\left|n_{\mu,\,abs}^{(r)}(n)\right| = \left|x_\mu^{(r)}(n)\right|$$

**nein branch:**

$$\left|n_{\mu,\,akt}^{(r)}(n)\right| = \left|x_\mu^{(r)}(n)\right|$$

$$\left|n_{\mu,\,M_{MS}}^{(r)}(n)\right| = \left|n_{\mu,\,M_{MS}-1}^{(r)}(n-1)\right|$$

$$\vdots$$

$$\left|n_{\mu,\,2}^{(r)}(n)\right| = \left|n_{\mu,\,1}^{(r)}(n-1)\right|$$

$$\left|n_{\mu,\,1}^{(r)}(n)\right| = \left|n_{\mu,\,akt}^{(r)}(n)\right|$$

$$\left|n_{\mu,\,abs}^{(r)}(n)\right| = \text{Min}\{...\}$$

Alle nicht veränderten Größen, werden auf den vergangenen Wert gesetzt!

Ende

FIG 10

Verrauschtes Sprachsignal

x 10$^4$

Geräusch- und Summensignalpegel eines Teilbandes

[dB]

Dämpfungsfaktor eines Teilbandes

[dB]

Sekunden

# FIG 11

$$\underline{g}(k) \begin{cases} \begin{bmatrix} b_0^{(r)}\left(\frac{k}{r}\right) + \frac{2}{N}\sum_{i=1}^{\frac{N}{2}-1} b_i^{(r)}\left(\frac{k}{r}\right)\cos\left(\frac{2\pi}{N}i\,\frac{N}{2}\right) + b_{\frac{N}{2}}^{(r)}\left(\frac{k}{r}\right)(-1)^{\frac{N}{2}} \\[2em] b_0^{(r)}\left(\frac{k}{r}\right) + \frac{2}{N}\sum_{i=1}^{\frac{N}{2}-1} b_i^{(r)}\left(\frac{k}{r}\right)\cos\left(\frac{2\pi}{N}i\left(\frac{N}{2}-1\right)\right) + b_{\frac{N}{2}-1}^{(r)}\left(\frac{k}{r}\right)(-1)^{\left(\frac{N}{2}-1\right)} \\[1em] \vdots \\[1em] b_0^{(r)}\left(\frac{k}{r}\right) + \frac{2}{N}\sum_{i=1}^{\frac{N}{2}-1} b_i^{(r)}\left(\frac{k}{r}\right)\cos\left(\frac{2\pi}{N}i\right) - b_1^{(r)}\left(\frac{k}{r}\right) \\[2em] b_0^{(r)}\left(\frac{k}{r}\right) + \frac{2}{N}\sum_{i=1}^{\frac{N}{2}-1} b_i^{(r)}\left(\frac{k}{r}\right) + b_0^{(r)}\left(\frac{k}{r}\right) \\[2em] b_0^{(r)}\left(\frac{k}{r}\right) + \frac{2}{N}\sum_{i=1}^{\frac{N}{2}-1} b_i^{(r)}\left(\frac{k}{r}\right)\cos\left(\frac{2\pi}{N}i\right) - b_1^{(r)}\left(\frac{k}{r}\right) \\[1em] \vdots \\[1em] b_0^{(r)}\left(\frac{k}{r}\right) + \frac{2}{N}\sum_{i=1}^{\frac{N}{2}-1} b_i^{(r)}\left(\frac{k}{r}\right)\cos\left(\frac{2\pi}{N}i\left(\frac{N}{2}-1\right)\right) + b_{\frac{N}{2}-1}^{(r)}\left(\frac{k}{r}\right)(-1)^{\left(\frac{N}{2}-1\right)} \end{bmatrix} & \text{falls } k \bmod r = 0 \\[2em] \underline{g}(k-1) & \text{sonst} \end{cases}$$